(19)

**Europäisches Patentamt**

**European Patent Office**

**Office européen des brevets**

(11) **EP 1 043 901 A2**

(12) **EUROPEAN PATENT APPLICATION**

(43) Date of publication:
**11.10.2000 Bulletin 2000/41**

(51) Int. Cl.⁷: **H04Q 7/22**, H04Q 7/38

(21) Application number: **00302514.5**

(22) Date of filing: **28.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.04.1999 US 288365**

(71) Applicant:
**LUCENT TECHNOLOGIES INC.**
**Murray Hill, New Jersey 07974-0636 (US)**

(72) Inventors:
- **Kuo, Wen-Yi**
  **Parsippany, New Jersey 07045 (US)**
- **Lu, Ming**
  **Piscataway, New Jersey 08854 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(54) **Method for premature termination of burst transmission in wireless communication systems**

(57) The invention provides a novel methodology that increases the performance of wireless communication systems by efficiently managing the assignment of burst transmissions. The invention provides a mechanism for premature termination of burst transmissions, depending on a set of intelligent criteria. The invention checks for power overload conditions and excessive frame error rates (FER) in determining a premature burst termination. Also checked is a known time period which no burst shall exceed in transferring data. The invention advantageously increases the system throughput and data rates and maximizes power capacity in the data channels. In particular, transmission quality is maintained, as power overloading and excessive interference problems are circumvented. Systems resources are efficiently conserved and better utilized as a result.

FIG. 1

**EP 1 043 901 A2**

**Description**

**Related Applications**

The invention is related to U.S. Patent Application Serial Number _____, filed concurrently herewith, entitled INTELLIGENT BURST CONTROL FUNCTIONS FOR WIRELESS COMMUNICATION SYSTEMS, U.S. Patent Application Serial Number _____, entitled BURST DURATION ASSIGNMENT BASED ON FADING FLUCTUATION AND MOBILITY IN WIRELESS COMMUNICATION SYSTEMS, filed concurrently herewith, U.S. Patent Application Serial Number _____, entitled SYSTEM AND METHOD FOR PREVENTION OF REVERSE JAMMING DUE TO LINK IMBALANCE IN WIRELESS COMMUNICATION SYSTEMS, filed concurrently herewith, U.S. Patent Application Serial Number _____, entitled A METHOD OF QUEUE LENGTH BASED BURST MANAGEMENT IN WIRELESS COMMUNICATION SYSTEMS, filed concurrently herewith, U.S Patent Application Serial Number _____, entitled A METHOD OF DYNAMICALLY ADJUSTING THE DURATION OF A BURST TRANSMISSION IN WIRELESS COMMUNICATION SYSTEMS, filed concurrently herewith, all of which are assigned to the same assignee and are incorporated by reference herein.

**Field Of The Invention**

The invention relates to wireless communication systems and, more particularly, to the prevention of power overload or excessive interference in such systems.

**Background Of The Invention**

Wireless communication systems have been developed to allow transmission of information signals between an originating location and a destination location. Both analog (first generation) and digital (second generation) systems have been used to transmit such information signals over communication channels linking the source and destination locations. Digital methods tend to afford several advantages relative to analog techniques, including, e.g., improved immunity to channel noise and interference, increased capacity, and improved security of communication through the use of encryption.

While first generation systems were primarily directed to voice communication, second generation systems support both voice and data applications. Numerous techniques are known in second-generation systems for handling data transmissions which have different transmission requirements. Several modulation/coding arrangements have been developed for wireless systems based on multiple access techniques, e.g., frequency division multiple access (FDMA), time division multiple access (TDMA) and code division multiple access (CDMA). In FDMA techniques, each user is allocated one or more specific sub-bands of frequency. In TDMA techniques, periodically recurring time slots are identified, and for each segment of time each user is allocated one or more time slots. CDMA systems provide reduced multiple path distortion and co-channel interference and reduce the burden of frequency/channel planning that is common with FDMA and TDMA systems.

In a CDMA system, a unique binary spreading sequence (a code) is assigned for each call to each user. Multiplied by the assigned code, the user's signal is spread unto a channel bandwidth much wider than the user signal bandwidth. The ratio of the system channel bandwidth to the user's bandwidth is commonly called the spreading gain. All active users share the same system channel bandwidth frequency spectrum at the same time. Calculating the signal-to-interference (S/I) ratio determines the connection quality of the transmission link. Given a required S/I ratio, the system capacity is proportional to the spreading gain. The signal of each user is separated from the others at the receiver by using a correlator keyed with the associated code sequence to de-spread the desired signal.

First-generation analog and second-generation digital systems were designed to support voice communication with limited data communication capabilities. Third-generation wireless systems, using wide-band multiple access technologies such as CDMA, are expected to effectively handle a large variety of services, such as voice, video, data and imaging. Among the features which will be supported by third-generation systems is the transmission of high-speed data between a mobile terminal and a land-line network. As is known, high-speed data communications is often characterized by a short transmission "burst" at a high data transmission rate, followed by some longer period of little or no transmission activity from the data source. To accommodate the bursty nature of such high-speed data services in third-generation systems, it is necessary for the communications system to assign a large bandwidth segment (corresponding to the high data rate) for the duration of the data burst from time to time.

With the ability of the third generation systems to handle such bursty high-speed data transmission, throughput and delay for users can be advantageously improved. However, because of the large amount of instantaneous bandwidth required for transmission of a burst of high-speed data, the management of such bursts, and particularly the allocation of power and system resources thereto, must be handled with care to avoid unwarranted interference with other services using the same frequency allocation. Consequently, system designers need to deal with many issues in setting efficient data rates for different types of communications via a wireless link, including appropriate allocation of system resources for the bursts of data experienced with high-speed data service.

There is a continuing need to increase the performance of communication systems by accommodating a variety of users with different data rates. In particular, there is a need to maintain transmission quality by preventing power overloading and excessive interference problems. There is a corollary need for a mechanism that improves or increases the system throughput and data rates of individual users, particularly for high-speed data, accessing a wireless communications system. There is also a need to make allocation of systems resources more efficient in a multi-user environment.

## Summary Of The Invention

An object of the invention is the management of burst transmission bandwidth assignment to improve utilization of wireless system power capacity. In furtherance of that objective, the invention provides a mechanism for premature termination of burst transmissions, depending on one or more intelligent criteria. The invention checks for overload conditions and excessive frame error rates (FER), or frame retransmission request (ARQ-NACK) rates, in determining a premature burst termination. Also checked is data transmission activity during a known time period, and particularly, the absence of transmission activity during such period.

Specifically, the one or more criteria for premature burst termination in the forward link burst transmission mode include power overload conditions at a serving base transceiver station (BTS), the value of the FER (or alternatively, the ARQ-NACK rate) exceeding an acceptable error rate, and the absence of any data transmission activity within a known time period. The criteria for reverse link burst transmissions include interference overload conditions in any BTS of an evaluation set for a specific MS, an excessive value of FER or ARQ-NACK rate, and absence of data transmission activity within a known time period.

The invention provides a novel methodology for increasing the performance of wireless communication systems by efficiently managing the assignment of burst transmissions. The invention advantageously increases the system throughput and data rates and maximizes power capacity in the data channels. In particular, transmission quality is maintained, as power overloading and excessive interference problems are circumvented. Systems resources are efficiently conserved and better utilized as a result.

## Brief Description Of The Drawings

Figure 1 is a flow diagram illustrating the methodology of the invention.

Figure 2 is a flow diagram illustrating the methodology of the invention for forward data burst transfers.

Figure 3 is a flow diagram illustrating the methodology of the invention for reverse data burst transfers.

## Detailed Description

The focus of early wireless systems, particularly first-generation analog systems, was primarily voice communication. With second-generation wireless systems, including CDMA, TDMA and Global System for Mobile Communications (GSM), came varying degrees of improvement in terms of voice quality, network capacity and enhanced services. However, while second-generation systems are suitable to the provision of voice, low rate data, facsimile and messaging, they are generally not able to effectively address requirements for high-speed mobile data rates. The evolution to third-generation wireless communications represents, essentially, a paradigm shift to the world of multimedia mobile communications, where users will have access not just to voice services but also to video, image, text, graphic and data communications. The third-generation networks are expected to provide mobile users with data rates of between 144 Kbps and 2 Mbps.

Nonetheless, in wireless networks supporting higher speed data communications applications, burst transmissions must be managed very carefully to avoid power overload or unacceptable interference when handling higher speed applications and other applications (*e.g.*, voice calls). As will be shown hereafter, the invention provides a novel methodology that increases the performance of wireless communication systems by efficiently managing the assignment of burst transmissions with respect to such higher speed data applications. Although the invention will be hereafter described in terms of a preferred embodiment based on CDMA encoding of the wireless signals, it should be apparent that the methodology of the invention can also be applied for other wireless channelization arrangements, including TDMA and GSM.

Burst assignment (*i.e.*, bandwidth/power allocation provided to user for anticipated data burst) is based on the user's history and contemporaneous conditions at the time of assignment. Such contemporaneous conditions can change very rapidly, even within the time frame of the burst transmission. As a result of such change, a given burst assignment may become inappropriate sometime after the assignment --.*e.g.*, the effective data rate being transmitted by the user may drop below the rate contemplated by the burst assignment. For instance, the power needed to achieve a desired FER may be unavailable due to preexisting loading of the system transmission resources by other users in the same cell. Additionally, the achieved FER may drop below the level required during a long burst duration, particularly if the user is highly mobile. Moreover, fading conditions, which negatively affect transmission quality, particularly in an urban user environment, may change the power loading conditions, as well as the achievable FER, within the duration of the burst transmission. As a result, continuation of the burst assignment unnecessarily wastes power capacity and system resources. Data rates and throughput suffer as well. Overall data transfer in the forward link may encounter power overloading problems, whereas data transfer in the reverse link may encounter excessive interference.

In a wireless system established to provide high data-rate burst transmissions, the amount of transmission power required for such a burst transmission will often represent a significant portion of the total transmission power available to the transmitting station handling the burst. Thus the transmission requirements of a single high data-rate user, which may consume a significant amount of transmission power, can lead to overloading problems in a forward burst transmission. Similarly, for a reverse-link burst transmission, such a high data-rate (and high power) user may generate significant interference which negatively affects other reverse link users in the same physical proximity. To address these concerns for the case where a continuation of the burst may no longer be appropriate (as discussed above), the invention advantageously provides intelligent criteria for effecting a premature burst termination for both the forward link and the reverse link in a wireless communication system. For the illustrative embodiment of the invention described hereafter, the method of the invention operates to establish and act upon premature burst termination criteria in respect to a forward power overload condition (or an interference overload in the reverse link), occurrence of an unacceptable FER (or alternatively, the ARQ-NACK rate), and an apparent loss or termination of the user's input signal. It will, however, be apparent to those skilled in the art that other such criteria could be chosen and all such criteria are intended to be within the scope of the invention.

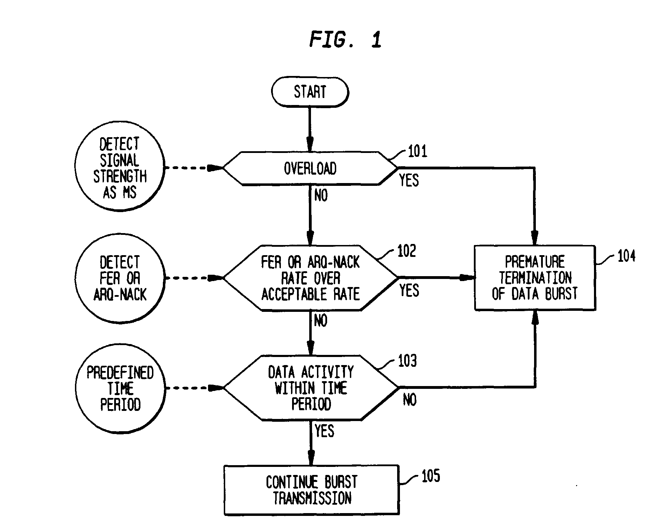

A high level depiction of the methodology of the invention for premature burst termination is shown in Figure 1. As can be seen from the figure, while the burst transmission is in progress, the system monitors loading conditions at the MS and checks for any overload in Step 101. If a power overload is detected, the data burst is prematurely terminated in Step 104. If the overloading test is satisfied, the system checks the FER against an acceptable rate in Step 102. An alternative is to check the frame retransmission request (ARQ-NACK) rate against the acceptable rate. If the FER or ARQ-NACK rate exceeds the acceptable rate, then the data burst is prematurely terminated in Step 104. If the FER (or ARQ-NACK rate) test is satisfied, the system monitors data activity to see if there is transmission activity during a known time period in Step 103. If no data transmission activity is detected during the known time period, the burst transmission is prematurely terminated in Step 104. If not, the burst transmission continues in Step 105 until the end of its assigned duration. It is noted that the order of application of these criteria is not important to the method and scope of the invention. The order presented herein is merely exemplary.

Referring to Steps 101, 102 and 103 in Figure 1, the specific criteria for premature burst termination according to the illustrated embodiment of the invention, as well as the detection of such criteria, will be better understood in connection with the following further description. Once a burst assignment has been made and the data source is transmitting, the relevant BSC (base station controller or equivalent device) monitors the status of the assignment and causes the BTS or MS, as appropriate, to carry out a premature burst termination based on the detection of transmission events which implicate one or more burst termination criteria. For the illustrated embodiment of the invention, those criteria are:

1. An overload is detected at any serving BTS in communication with one or more high data-rate users. In the forward link, a detected overload may be power overloading conditions. In the reverse link, a detected overload may be interference overloading in the transmission path. In the event more than one high data-rate user is operating in a cell at time such a power overload is detected, user-defined selection criteria would be applied to select one of such multiple users to terminate. Obvious prioritizations would include selection of either the highest data-rate user or the lowest data-rate user (assuming the transmission power to be recovered by termination of the lowest data-rate user were sufficient to overcome the power overload condition). Other such choices will be apparent to those skilled in the art.

2. The FER or the ARQ-NACK rate exceeds an acceptable value. As will be apparent, the ARQ-NACK rate serves as a proxy for the frame error rate of the link. In defining such an acceptable ARQ-NACK rate, the following relation would normally be applied

*NACK rate = Number of NACKs Observation_Window > Acceptable_NACK*

where *NACK* stands for negative acknowledgment, and *Observation_Window* is a particular frame or a particular number of frames.

3. No data transmission activity is detected for an assigned burst transmission link during a known time period. A specific embodiment of means for detection of the absence of data transmission activity within a known time period is detailed in U.S. Patent Application _____, entitled A METHOD OF REDUCING BURST ASSIGNMENT SETUP TIME IN WIRELESS COMMUNICATION SYSTEMS, filed concurrently herewith and incorporated by reference herein.

Note that as long as any one of these criterion is met, the premature termination of the burst transmission is performed.

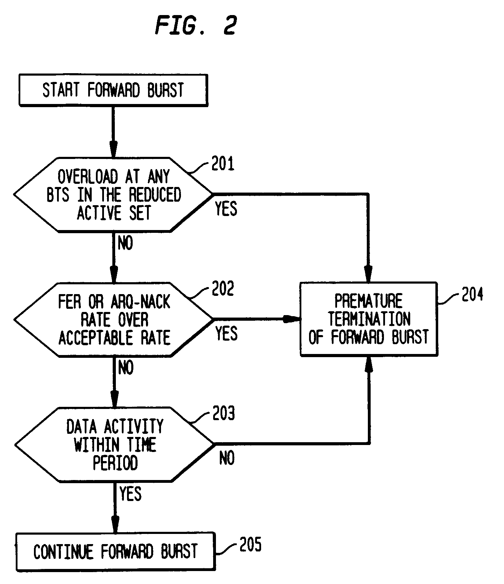

A specific embodiment of the method for prematurely terminating a forward burst transmission is illustrated in block diagram form in Figure 2. Application of the method of the invention to a forward burst transmission is similar to the general methodology of the invention as depicted in Figure 1. Referring specifically to the case of power overload detection for a forward burst transmission, as shown in Figure 2, the system monitors and detects, in Step 201, the relative signal strength at the MS with respect to any BTS in a monitored set of BTSs in communication with the user(s). That monitored set of BTSs may be the active set of BTSs for that user. Other BTS sets can, however be chosen, for example the reduced active set of BTSs as described in U.S. Patent Application _____, entitled INTELLIGENT BURST CONTROL FUNCTIONS FOR WIRELESS COMMUNICATION SYSTEMS, filed concurrently herewith and incorporated by reference herein. If any BTS in the monitored set exhibits power overload conditions, the burst transmission is terminated, as in Step 204.

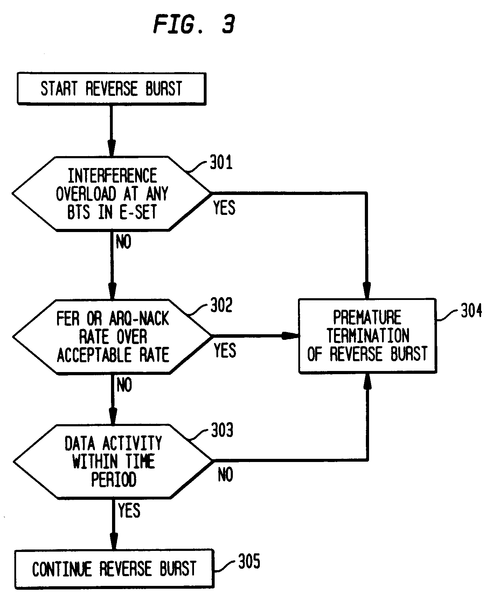

A specific embodiment of the method for prematurely terminating a reverse burst transmission is illustrated in block diagram form in Figure 3. Application of the method of the invention to a reverse burst transmission is similar to the general methodology of the invention as depicted in Figure 1. Referring specifically to the case of interference overload detection for a reverse burst transmission, as shown in Figure 3, the system monitors and detects, in Step 301, the relative signal strength at the MS with respect to any BTS in a monitored set of BTS(s) in communication (or potentially in communication) with that user. That monitored set of BTSs may be the active set of BTSs for that user. Other BTS sets can, however be chosen, for example the reverse evaluation set (e-set) of BTSs as described in U.S. Patent Application _____, entitled SYSTEM AND METHOD FOR PREVENTION OF REVERSE JAMMING DUE TO LINK IMBALANCE IN WIRELESS COMMUNICATION SYSTEMS, filed concurrently herewith and incorporated by reference herein. If any BTS in the monitored-set exhibits power overload conditions, the burst transmission is terminated, as in Step 304.

Once the system decides to prematurely terminate the burst transmission in accordance to the methodology of the invention, rapid termination is critical as systems resources are optimized if unneeded burst is terminated as quickly as possible. Various messaging methods known in the art can be utilized for quick termination of burst activity.

Those skilled in the art will recognize that there are many configurations of wireless systems not specifically described herein but for which the methodology of the invention may be applied. Although the invention is described in its preferred embodiments, it is not intended to limit the invention to the precise embodiments disclosed herein. In particular, the invention can be utilized for third-generation mobile or personal communication systems that offer a multitude of data services in different operating scenarios, such as telephony, teleconference, voice mail, program sound, video telephony, video conference, remote terminal, user profile editing, telefax, voiceband data, database access, message broadcast, unrestricted digital information, navigation, location and Internet downloading services. The methodology for premature burst termination in the invention can also be utilized in second-generation systems, or any system that has burst transmission capability. Accordingly, this description is to be construed as illustrative only. Those skilled in this technology can make various alterations and modifications without departing from the scope and spirit of this invention. Therefore, the scope of the invention shall be defined and protected by the following claims and their equivalents. The invention is to be accorded the widest scope consistent with the principles and novel features disclosed herein. The exclusive use of all modifications within the scope of the claims is reserved.

**Claims**

1.   A resource allocation method in a wireless system, the system having a plurality of mobile stations (MS) and a plurality of base transceiver stations (BTS) which form a plurality of MS-BTS communication paths, comprising the steps of:

    transmitting a data burst;

evaluating at least one criterion related to system operation;
terminating the burst if the at least one criterion is met.

2. The method of Claim 1, further comprising the steps of:

   detecting power overload in at least one of the plurality of MS-BTS paths; and
   terminating the burst if power overload is detected.

3. The method of Claim 1, further comprising the steps of:

   detecting power overload in at least one of the plurality of MS-BTS paths;
   determining if a frame error rate is over an acceptable rate;
   detecting data activity in a known time period;
   terminating the burst if power overload is detected;
   terminating the burst if the frame error rate exceeds the acceptable rate; and
   terminating the burst if no data activity is detected in the known time period.

4. A communication method for a wireless system having a plurality of mobile stations and an active set of base transceiver stations corresponding to each mobile station, the system having forward burst transmission capability, comprising the steps of:

   transmitting a data burst;
   detecting power overload in a monitored set of base transceiver stations in communications with a mobile station; and
   terminating the burst if power overload is detected in the monitored set of base transceiver stations.

5. A communication method for a wireless system having a plurality of mobile stations and an evaluation set of base transceiver stations corresponding to each mobile station, the system having reverse burst transmission capability, comprising the steps of:

   transmitting a data burst;
   detecting power overload in a monitored set of base transceiver stations in communications with a mobile station; and
   terminating the burst if power overload is detected in the evaluation set.

6. The method in Claim 1,4 or 5, further comprising the steps of:

   determining if a frame error rate is over an acceptable rate; and
   terminating the burst if the frame error rate exceeds the acceptable rate.

7. The method in Claim 1,4 or 5, further comprising the steps of:

   detecting data activity in a known time period; and
   terminating the burst if no data activity is detected in the known time period.

8. The method in Claim 4 or 5, further comprising the steps of:

   determining if a frame error rate is over an acceptable rate;
   detecting data activity in a known time period;
   terminating the burst if the frame error rate exceeds the acceptable rate; and
   terminating the burst if no data activity is detected in the known time period.

9. The method in Claim 1,4 or 5 wherein the system is a code division multiple access (CDMA) system.

## FIG. 1

# FIG. 2

START FORWARD BURST

OVERLOAD AT ANY BTS IN THE REDUCED ACTIVE SET — 201

YES

NO

FER OR ARQ-NACK RATE OVER ACCEPTABLE RATE — 202

YES

NO

PREMATURE TERMINATION OF FORWARD BURST — 204

DATA ACTIVITY WITHIN TIME PERIOD — 203

NO

YES

CONTINUE FORWARD BURST — 205

# FIG. 3

```
            START REVERSE BURST
                    │
                    ▼
              ┌───────────────┐ ─ 301
              │  INTERFERENCE  │
              │ OVERLOAD AT ANY │──── YES ──────────────┐
              │   BTS IN E-SET  │                        │
              └───────────────┘                         │
                    │ NO                                 │
                    ▼                                    ▼
              ┌───────────────┐ ─ 302          ┌──────────────────┐ ─ 304
              │ FER OR ARQ-NACK │               │   PREMATURE      │
              │   RATE OVER     │──── YES ──────│  TERMINATION     │
              │ ACCEPTABLE RATE │               │ OF REVERSE BURST │
              └───────────────┘               └──────────────────┘
                    │ NO                                 ▲
                    ▼                                    │
              ┌───────────────┐ ─ 303                    │
              │ DATA ACTIVITY   │                         │
              │  WITHIN TIME    │──── NO ─────────────────┘
              │    PERIOD       │
              └───────────────┘
                    │ YES
                    ▼
            CONTINUE REVERSE BURST ─ 305
```